# EUROPEAN PATENT APPLICATION

(11) **EP 1 249 215 A1**
(43) Date of publication of application: **16.10.2002**
(21) Application number: 01109082.6
(22) Date of filing: 12.04.2001
(51) Int. Cl.: A61G 5/04, A61G 5/06, B62K 5/08

(54) **Articulated front axle assembly for small electric vehicles**

(71) Applicant: Pihsiang Machinery MFG. Co., Ltd., Hsin Feng Hsiang, Hsinchu County (TW)
(72) Inventor: Wu, Donald P.H., Hsin Feng Hsiang, Hsinchu County (TW)
(74) Representative: Harazim, Eugen, Dipl.-Phys.

(57) **Abstract**

An articulated front axle assembly for an electric invalid power chair is provided. The assembly mainly includes a guide bar (31) fixedly connected at an upper end to a lower end of a front direction-control handle (210) of the electric invalid power chair and at a lower end to a U-shaped articulation member (11) or a pivot shaft (23); and a front axle (20) pivotally connected at a predetermined position to the articulation member (11) or the pivot shaft (23). Two front guide wheels (21) are separately connected to two ends of the front axle (20). The front axle (20) is pivotally turnable relative to the guide bar (31) in response to any unevenness, such as bumps and pits, and obstruction, such as a stair and a threshold, on a ground or a road, such that either of the two front guide wheels is able to always keep close contact with the ground or the road, and thereby provides increased side support force to the electric invalid power chair and prevents the same from tilting over while making a turn, allowing the electric invalid power chair to operate in a more stable and safer manner.

## Description

### BACKGROUND OF THE INVENTION

The present invention relates to an articulated front axle assembly for an electric invalid power chair, and more particularly to a front axle pivotally connected via an articulation member to a guide bar below a direction-control handle of an electric invalid power chair, so that the articulated front axle is pivotally turnable about the articulation member in response to bumps or pits on ground to enable two front guide wheels connected to two ends of the front axle to always closely contact with ground for the electric chair to move stably and safely.

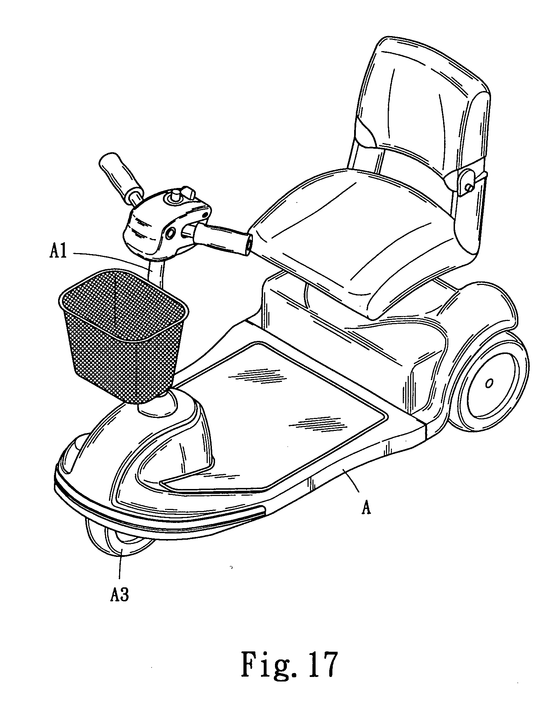

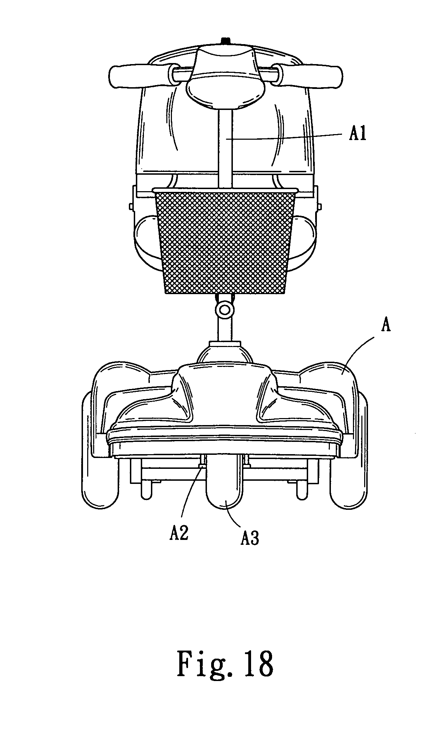

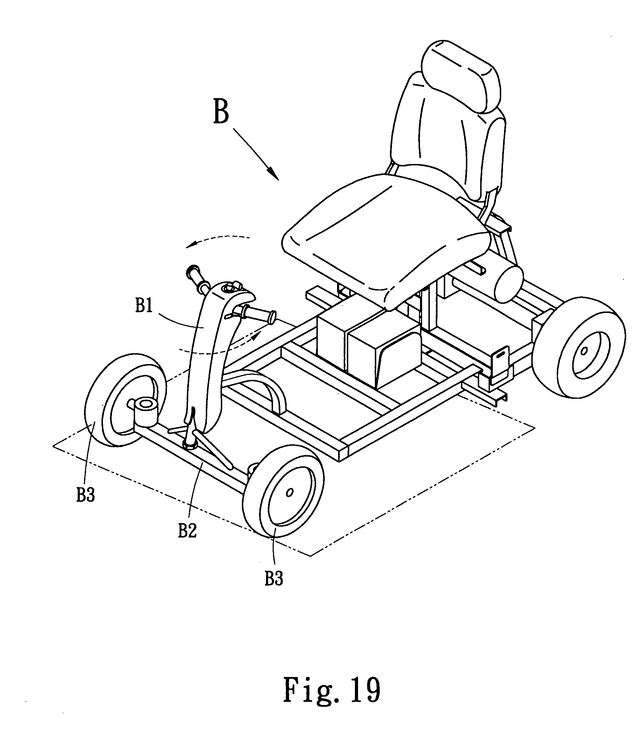

Cars and motorcycles have become very important traffic means in the modern society. However, exhaust discharged from cars and motorcycles also forms a serious pollution source in our environment. With the increasing requirement for environmental protection, there is developed an electric cart that not only enables reduced environmental pollution but also has reduced dimensions and weight as compared with ordinary cars and motorcycles. Such electric cart can be easily operated and is therefore widely welcome and employed by the invalid, the aged, housewives, and students to conveniently assist them in moving usually within a short distance.
The currently available electric carts are generally three-wheeled and four-wheeled. Figs. 17 and 18 illustrate a typical electric three-wheeled cart "A". Such type of electric three-wheeled cart "A" usually includes a direction-control handle A1 similar to a handlebar of a bicycle and fixedly connected to a front axle A2 for a front wheel A3. By turning the direction-control handle A1, the front wheel A3 is directed toward different directions under control. The three-wheeled and the four-wheeled electric carts are different in that the former can be more actively controlled to move in a small area or even to make a small turn while the latter is not so active and does not suitable for making turns within a small area, and that the former tends to lose control of direction and dangerously tilt over when making small turns, particularly on wet road, while the latter provides better side support force and is not easily subject to tilting over. Fig. 19 shows a four-wheeled electric cart B that includes a direction-control handle B1, a long front axle B2 fixedly connected to the handle B1, and two front wheels B3 connected to two ends of the fixed front axle B2. The four-wheeled electric cart B has a big volume and does not suitable for making small turns.

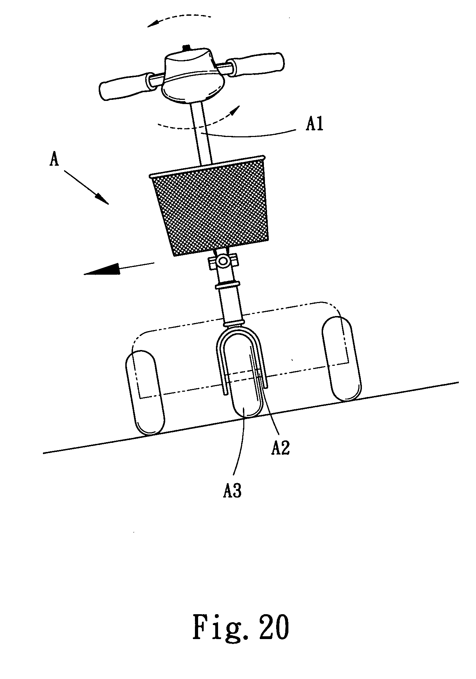

Please refer to Fig. 20. When an electric three-wheeled cart A is moving on a bump road, moving down a stair, or passing across an obstruction, such as a threshold, the direction-control handle A1 is always perpendicular to the front axle A2. Thus, the front wheel A3 does not sufficiently frictionally contact with the road and does not provide sufficient side support to the electric cart to possibly result in tilting over of the electric cart and endangers the driver. In the event the driver tries to make a turn on the bumpy or inclined road by manipulating the direction-control handle A1, the handle A1, the front axle A2 and the front wheel A3 all are actually already in a leftward or rightward inclined condition and are not easily turned to a different direction. Moreover, the front wheel A3 tends to lose close contact with the ground or road while the driver is making a turn, and the whole electric cart tends to lose balance and could not be stably and safely operated. The same conditions exist in the case of a four-wheeled electric cart B.

US Patent Application Serial No. 09305978 entitled "Electrical Wheelchair with Double Frame Structure", filed on May 5, 1999 by the same applicant of the present application and allowed on January 8, 2001, discloses technical means and structures for wheels of a four-wheeled electrical wheelchair to have excellent surface compliance when the wheelchair is moving on an uneven surface. However, the applicant finds there are still other problems in the physical operation of the electrical wheelchair disclosed in the above US patent application No. 09305978.

### SUMMARY OF THE INVENTION

It is therefore a primary object of the present invention to provide an articulated front axle assembly for an electric three-wheeled cart, particularly an electric three-wheeled invalid power chair, so that a front axle thereof is pivotally turnable in response to a road condition for two front guide wheels of the electric chair connected to two ends of the front axle to always close contact with the road while a direction-control handle of the electric chair is always in an upright operation position relative to the road. This enables the electric chair to have sufficient side support and to move in a more stable and safer manner without easily tilting over.

To achieve the above and other objects of the present invention, the articulated front axle assembly for an electric three-wheeled invalid power chair mainly includes a guide bar fixedly connected at an upper end to a lower end of a front direction-control handle of the electric invalid power chair and at a lower end to an n-shaped articulation member or a pivot shaft, and a front axle pivotally connected at a predetermined position to the articulation member or the pivot shaft. Two front guide wheels are separately connected to two ends of the front axle. The front axle is pivotally turnable about the articulation member or the pivot shaft relative to the guide bar in response to any unevenness, such as bumps and pits, and obstruction, such as a stair and a threshold, on a ground or a road, such that either of the two front guide wheels is able to always keep close contact with the ground or the road, and thereby provides increased side support force to the electric invalid power chair and prevents the same from tilting over while making a turn, allowing the electric invalid power chair to operate in a more stable and safer manner.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a perspective of an electric three-wheeled invalid power chair having an articulated front axle assembly according to the present invention;
Fig. 2 is a side view of the electric invalid power chair of Fig. 1, showing the connection of a direction-control handle of the electric chair to a guide bar of the articulated front axle assembly;
Fig. 3 is an exploded perspective of the articulated front axle assembly of the present invention;
Fig. 4 is a partially enlarged view of the encircled area C in Fig. 3, showing an n-shaped articulation member of the articulated front axle assembly of the present invention is fixedly connected to the guide bar;
Fig. 5 is a front view of the electric invalid power chair of Fig. 1;
Fig. 6 is a front view of the electric invalid power chair of Fig. 1 on a rightward inclined road when viewing from the driver's position, wherein the articulated front axle and the guide wheel set together provide an increased side support to the electric chair;
Fig. 7 is a front view of the electric invalid power chair of Fig. 1 on a leftward inclined road when viewing from the driver's position, wherein the articulated front axle and the guide wheel set together provide an increased side support to the electric chair;
Fig. 8 is a side view of the electric invalid power chair of Fig. 1, showing the articulated front axle thereof pivotally turns relative to the guide bar in response to a bump on the road;
Fig. 9 is a front view of Fig. 8;
Fig. 10 is a side view of the electric invalid power chair of Fig. 1, showing the articulated front axle thereof pivotally turns relative to the guide bar in response to a pit on the road;
Fig. 11 is a front view of Fig. 10;
Fig. 12 shows the articulated front axle and the guide wheel set of the electric invalid power chair of Fig. 1 pivotally turns when the electric chair is moving down a stair;
Fig. 13 shows the articulated front axle and the guide wheel set of the electric invalid power chair of Fig. 1 pivotally turns when the electric chair passes through a road obstruction, such as a threshold;
Fig. 14 shows the electric invalid power chair of Fig. 1 makes a turn on an even ground;
Fig. 15 is an exploded perspective of an articulated front axle assembly for an electric invalid power chair according to a second embodiment of the present invention;
Fig. 16 is a front view of Fig. 15;
Fig. 17 is a perspective of a conventional electric three-wheeled cart;
Fig. 18 is a front view of Fig. 17;
Fig. 19 is a perspective of a conventional electric four-wheeled cart; and
Fig. 20 shows the conventional electric three-wheeled cart moving on an inclined road has bias center of gravity and inclined front wheel.

### DETAILED DESCRIPTION OF THE PREFERRED EMBODIMENTS

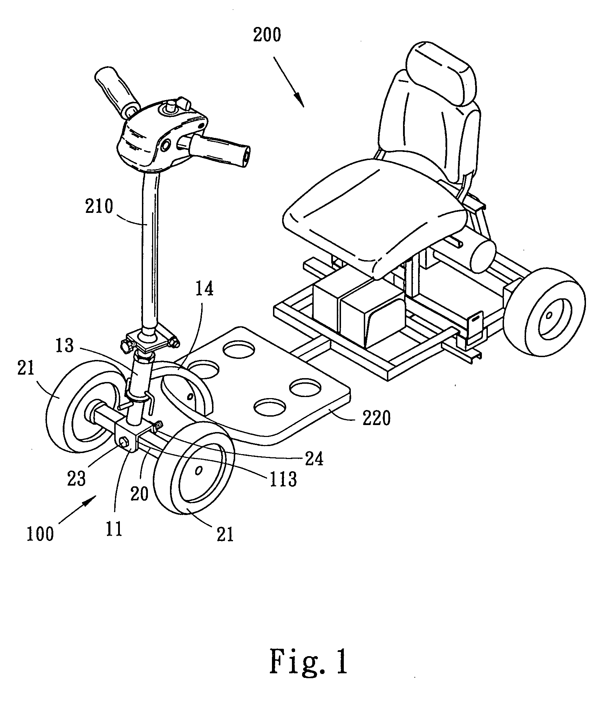

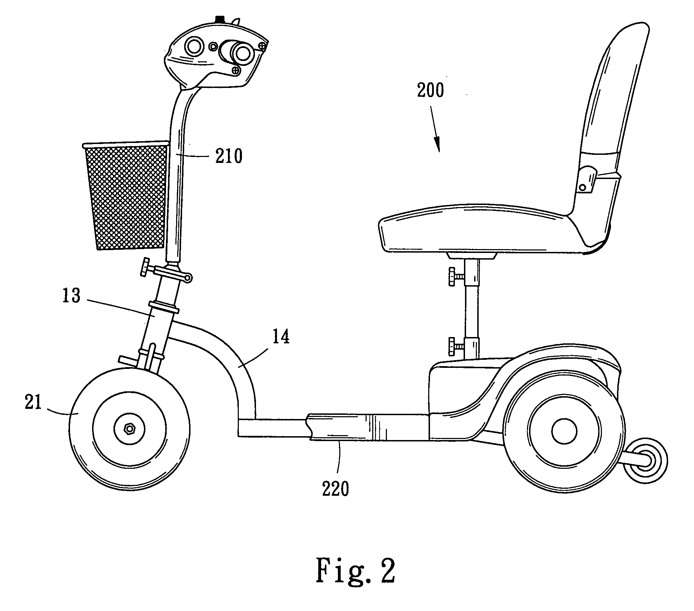

Please refer to Figs. 1 through 4, in which an electric invalid power chair 200 having an articulated front axle assembly 100 according to the present invention is shown. The articulated front axle assembly 100 mainly includes a front axle 20 and a guide bar 31.

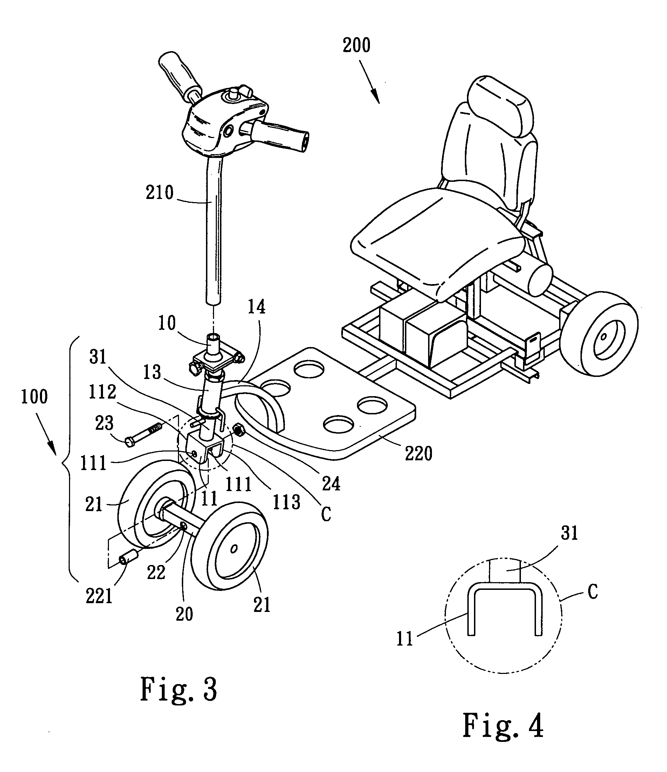

As can be best seen from Fig. 4, the guide bar 31 is fixedly connected at an upper end to a lower end of a front direction-control handle 210 of the electric invalid power chair 200 via a connector 10 mounted to the upper end of the guide bar 31. The guide bar 31 is partially movably received in an outer sleeve 13 that is connected to an upper front end of a link 14, of which a lower rear end is connected to a front deck 220 of the electric chair 200, such that the outer sleeve 13 protects an upper portion of the guide bar 31 and does not move along with the front direction-control handle 210. An n-shaped articulation member 11 is fixedly provided at a lower end of the guide bar 30, such that two vertical wall portions of the n-shaped articulation member 11 extend downward and are adapted to separately locate at a front and a rear side of the front axle 20. Both of the two vertical wall portions are provided at a predetermined point with a through hole 111.

The front axle 20 has a length that is determined depending on actual need. In the case of an electric three-wheeled invalid power chair 200 as illustrated in Figs. 1 through 4, the front axle 20 has a reduced length, as compared with a front axle used on a four-wheeled electric invalid power chair (not shown). At least one front guide wheel 21 is connected to each of two ends of the front axle 20 to provide a front guide wheel set for the electric chair 200. The front axle 20 is provided at predetermined positions on front and rear sides each with a connecting hole 22, through which a sleeve 221 is mounted. By locating the front axle 20 between the two wall portions of the articulation member 11 and aligning the sleeve 221 with the two through holes 111 provided on the n-shaped articulation member 11, and then extending a pivot shaft 23 through the sleeve 221 and the holes 111 to engage a rear end of the pivot shaft with a nut 24, the front axle 20 is pivotally connected to the n-shaped articulation member 11. The articulation member 11 and the front axle 20 are so designed and connected that a clearance X exists between either of two lateral ends 112, 113 of the articulation member 11 and the front axle 20, allowing the front axle 20 to pivotally turn about the pivot shaft 221 relative to the guide bar 31 by an angle determined by a size of the clearance X. Since the two front guide wheels 21 are fixedly connected to two ends of the front axle 20, they ascend or descend when the front axle 20 pivotally turns about the pivot shaft 23.

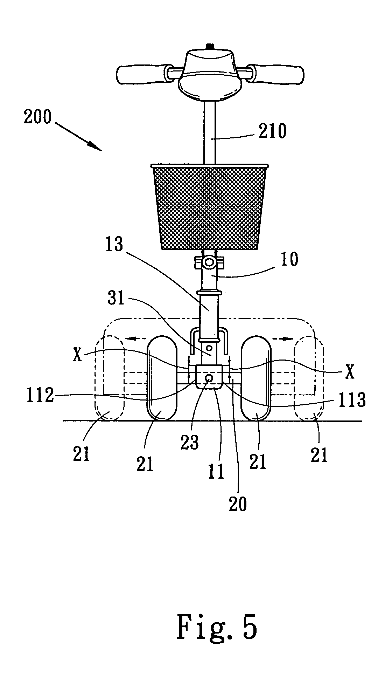

Fig. 5 shows the articulated front axle assembly 100 is used with an electric three-wheeled invalid power chair 200 as that shown in Figs. 1 through 4. In this case, the front axle 20 has a short length, such that the two front guide wheels 21 are close enough to be viewed as an integral unit, that is, as a single front guide wheel. And, the electric three-wheeled invalid power chair 200 can be easily converted into a four-wheeled electric chair (not shown) simply by replacing the short front axle 20 with a long one. The articulated front axle assembly 100 of the present invention can therefore have widened range of application and increased industrial value.

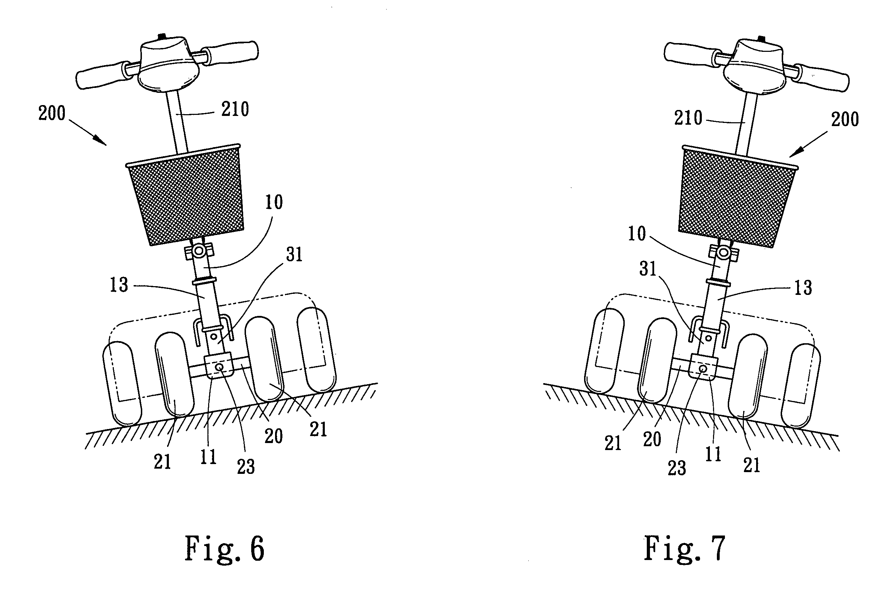

Figs. 6 and 7 respectively show the manner in which the articulated front axle assembly 100 of the present invention works to keep the electric invalid power chair 200 in a stable and safe condition when the same is moving on a rightward and a leftward inclined road. Since the front axle 20 is pivotally connected to the fixed guide bar 31 via the n-shaped articulation member 11 and the pivot shaft 23, it always allows the two front guide wheels 21 connected to two ends thereof to automatically move into positions fitly in contact with the inclined road. Further, since there are at least two front guide wheels 21, a side supporting force provided by the front guide wheels 21 to the electric chair 200 is evenly distributed and therefore multiplied, making the electric invalid power chair 200 to move on the road in a more stably and safer manner. It is to be noted that the front direction-control handle 210 of the electric chair 200 does not pivotally turn rightward or leftward relative to the inclined road but keeps in an initially upright operating position normal to the road. This ensures that a driver of the electric chair 200 would not be endangered due to any bias center of gravity of the electric chair 200 and that the electric chair 200 could still be easily steered under control. The sleeve 221 also serves as an absorber and a buffer to eliminate any mechanical wear of the front axle 20 and the n-shaped articulation member 11 due to the pivotal turning of the front axle 20 relative to the articulation member 11. Thus, the front direction-control handle 210 could be manipulated in a more comfortable and safer manner.

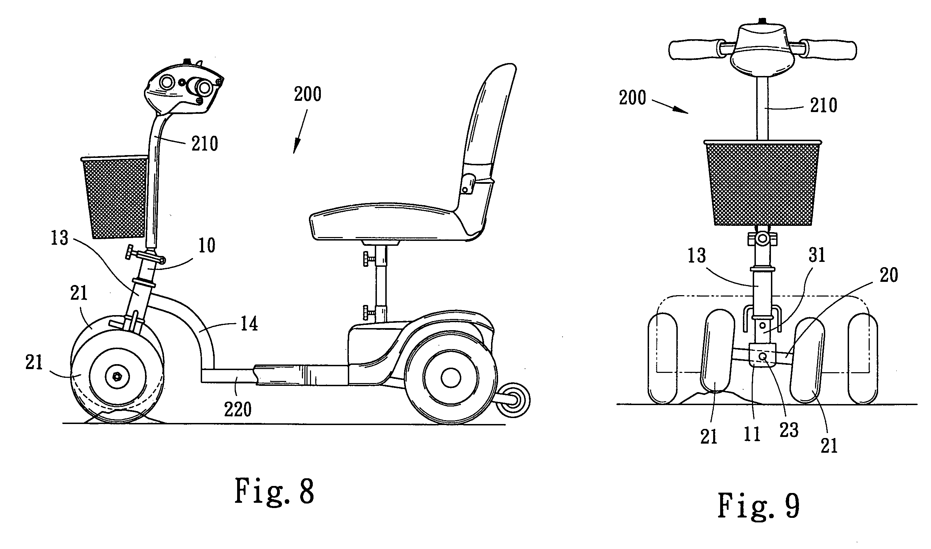

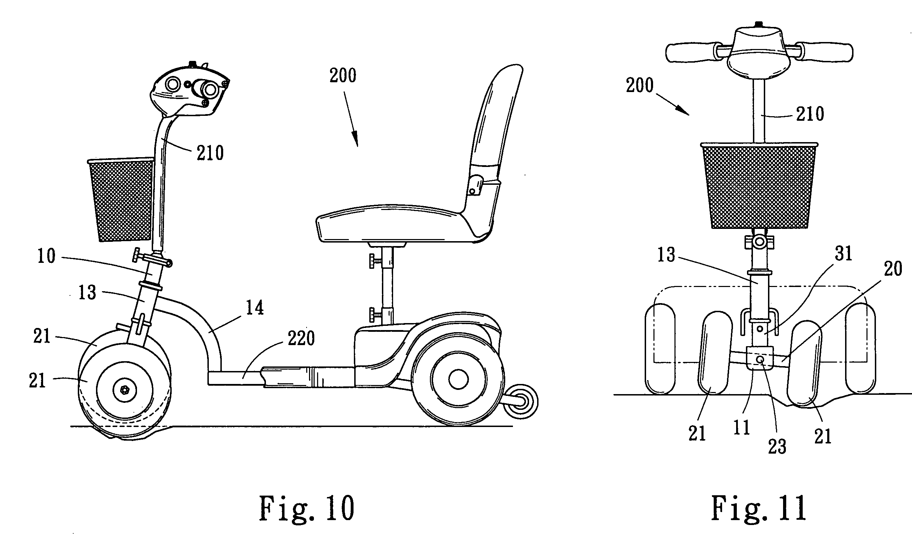

Figs. 8 and 9 show the electric invalid power chair 200 moves on an uneven road and the front axle 20 thereof pivotally turns relative to the articulation member 11 and accordingly the guide bar 31 to raise one of the front guide wheels 21 when the latter passes over a bump on the road. Similarly, Figs. 10 and 11 show the electric invalid power chair 200 moves on an uneven road and the front axle 20 thereof pivotally turns relative to the articulation member 11 and accordingly the guide bar 31 to raise one of the front guide wheels 21 when the latter passes through a pit on the road. Please note, in either case, the front direction-control handle 210 of the electric chair 200 is always in an upright operating position normal to the road surface while both front guide wheels 21 keep in close contact with the uneven road. This close contact of the front guide wheels with the bumpy road largely reduces the risk of a suspended front wheel and a tilted electric invalid power chair to further enhance the stable and safe operating of the electric invalid power chair 200.

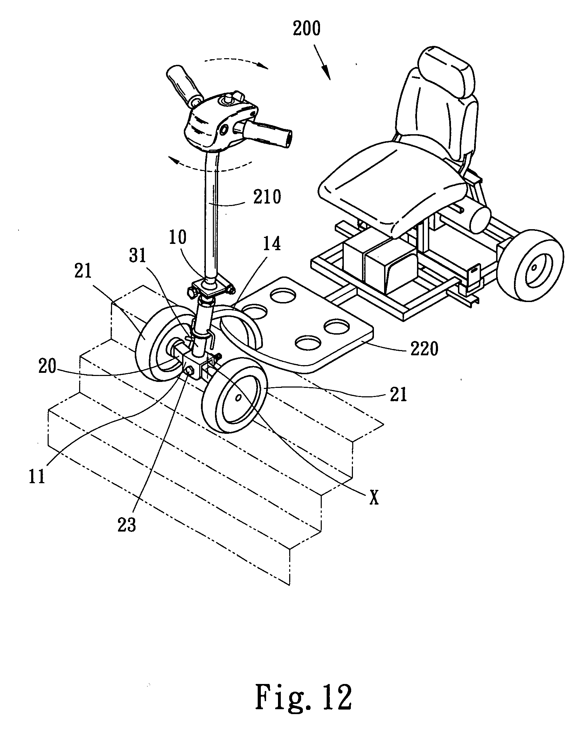

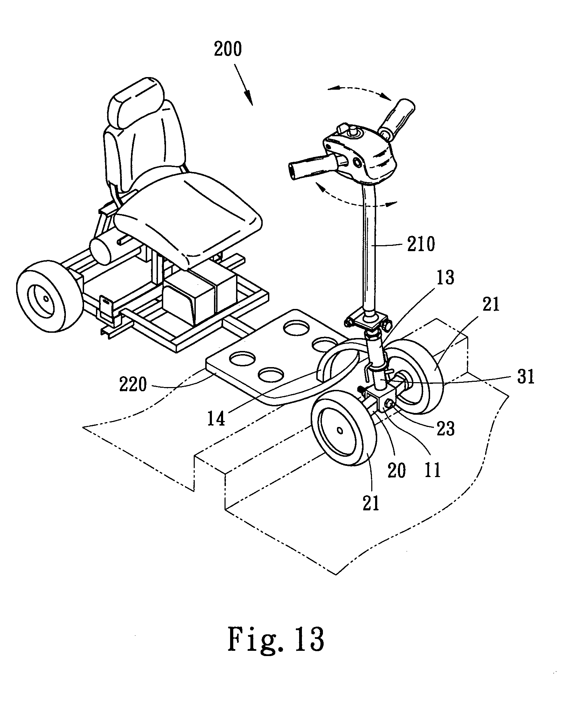

Please refer to Figs. 12 and 13 that show an electric invalid power chair 200 having the articulated front axle assembly 100 of the present invention moving down a stair and passing across a threshold, respectively. A height difference existed between two adjacent steps and between a top of the threshold and a ground surface forms an obstruction that would usually cause the two front guide wheels 21 to locate at different levels and result in horizontal deflection of the front direction-control handle 210, as indicated by arrows in Figs. 12 and 13. In the case of a conventional electrical cart, two front guide wheels that fail to locate at the same level tend to result in an unbalanced state and even tilting over of the whole electric chair. However, in the case of the electric invalid power chair 200 having the articulated front axle assembly 100, the pivotal connection of the front axle 20 to the articulation member 11 and accordingly the guide bar 31 via the pivot shaft 23 enables the front axle 20 to swing about the pivot shaft 23 in response to the height difference, allowing either of the two front guide wheels 21 mounted at two ends of the front axle 20 to always closely contact with the steps, the threshold or the ground surface while the electric chair 200 moves. It is to be noted that the always close contact of the front guide wheels 21 with the uneven surface enables the whole electric invalid power chair 200 to keep moving not only stably but also in an optimal operating condition in which any vibration caused by any road obstruction is minimized. Meanwhile, the front direction-control handle 210 of the electric invalid power chair 200 is able to keep its upright operating position without horizontal deflection. That is, a center of gravity of the whole electric invalid power chair 200 does not displace due to the road obstruction and could still be conveniently controlled through the front direction-control handle 210 to move forward stably and safely.

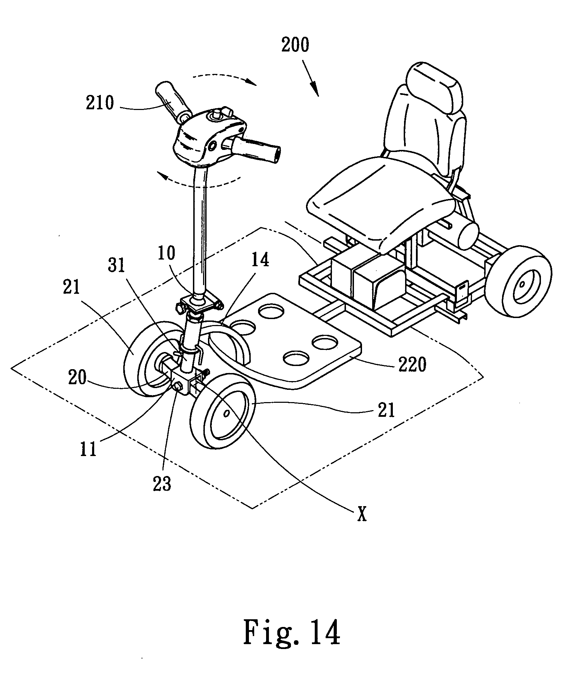

Fig. 14 illustrates the electric invalid power chair 200 with the articulated front axle assembly 100 makes a right turn on a generally even road or ground surface. It is known that there will be a difference in radius of turn between a front left and a front right wheel when a vehicle is making a right turn. That is, the two front wheels do not rotate at the same speed and in parallel with one another when the vehicle makes a turn. In the case of a conventional electrical cart, making a right turn would result in a suspended front left wheel. However, in the case of the electric invalid power chair 200 having the articulated front axle assembly 100 of the present invention, a horizontal deflecting of the front direction-control handle 210 by a driver to make a right turn would cause the front axle 20 to pivotally swing counterclockwise about the pivot shaft 23 or to decline leftward (when viewing from the driver's position), resulted in a reduced right clearance X and an increased left clearance X. That is, the guide bar 31 and the front axle 20 are now slightly angularly instead of perpendicularly connected to each other. That is, the front left guide wheel 21 is allowed to move downward within a predetermined allowance defined by the clearance X, so that it could closely contact with the ground or road without becoming suspended when the electric invalid power chair 200 is turned rightward. The articulated front axle assembly 100 therefore enables the front guide wheels 21 of the electric invalid power chair 200 to have very good ground-contact ability to ensure stable and safe operation of the electric chair 200.

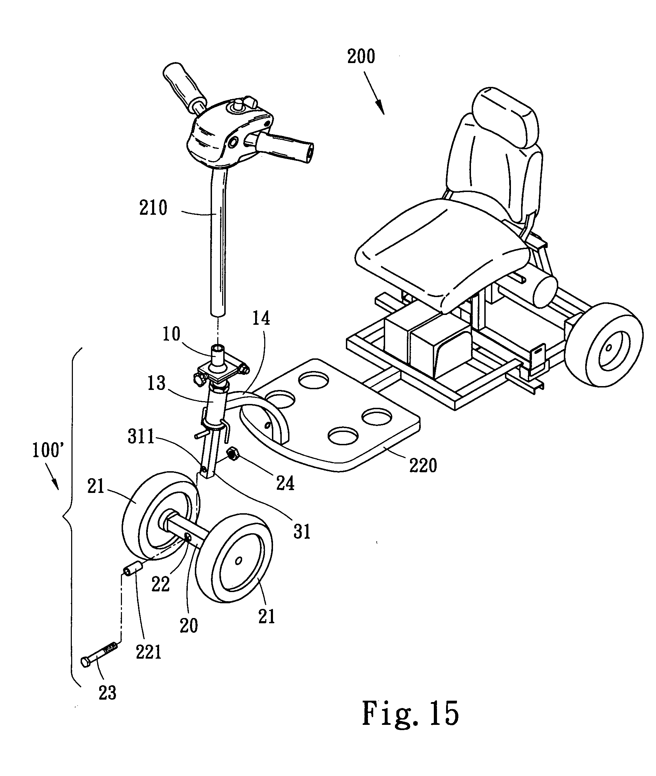

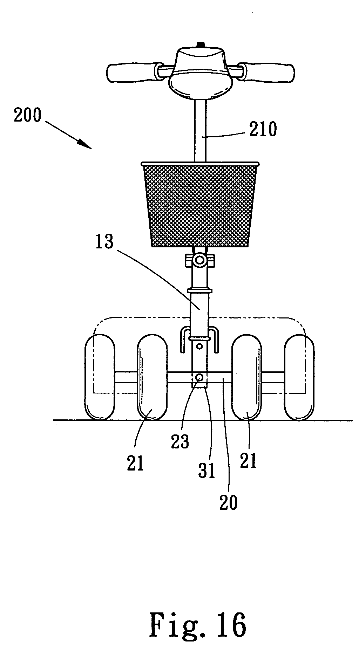

Figs. 15 and 16 illustrate another embodiment of the articulated front axle assembly 100' of the present invention. In this embodiment, the n-shaped articulation member 11 is omitted and the guide bar 31 is provided at the lower end at a predetermined position with a through hole 311. As in the first embodiment, the front axle 20 is provided with two connecting holes 22 into which a sleeve 221 is optionally inserted. The guide bar 31 is directly connected at the lower end to the front axle 20 by extending a pivot shaft 23 through the connecting holes 22, the sleeve 221, and the through hole 311 to engage a rear end of the pivot shaft 23 with a nut 24, so that the front axle 20 is pivotally turnable relative to the guide bar 31 to form the articulated front axle assembly 100' that is simplified but functionally equivalent as compared with the articulated front axle assembly 100 in the first embodiment.

The articulated front axle assembly of the present invention is characterized in that it has simple structure to meet the principles of body engineering and that it enables an electric invalid power chair to always keep balanced during operation and have increased side supporting force to stably and safely move on different road conditions, including inclined road surface, bumpy road surface, stairs, road obstructions, such as a threshold.

The present invention has been described with a preferred embodiment thereof and it is understood that many changes and modifications in the described embodiment can be carried out without departing from the scope and the spirit of the invention that is intended to be limited only by the appended claims.

## Claims

1. An articulated front axle assembly for an electric three-wheeled invalid power chair, comprising a guide bar fixedly connected at an upper end to a lower end of a front direction-control handle of said electric invalid power chair and at a lower end to an n-shaped articulation member, and a front axle pivotally turnably connected at a predetermined position to said n-shaped articulation member by means of a pivot shaft, such that a predetermined clearance exists between said front axle and a right and a left end of said n-shaped articulation member; two front guide wheels being separately connected to two ends of said front axle to provide a front guide wheel set for said electric invalid power chair including; said front axle being pivotally turnable about said pivot shaft relative to said articulation member within a range defined by said clearance X in response to any unevenness, such as bumps and pits, and obstruction, such as a stair and a threshold, on a ground or a road, such that either of said two front guide wheels is able to always keep close contact with the ground or the road, and thereby provides increased side support force to said electric invalid power chair and prevents the electric invalid power chair from tilting over while making a turn.

2. The articulated front axle assembly for an electric three-wheeled invalid power chair as claimed in claim 1, wherein said n-shaped articulation member fixedly connected to the lower end of the guide bar is provided on front and rear wall portions with two aligned through holes, said front axle being provided at said predetermined position with a connecting hole to extend through front and rear sides of said front axle and correspond to said through holes on said n-shaped articulation member, and said front axle being disposed between said two wall portions of said n-shaped articulation member and being pivotally connected thereto by extending said pivot shaft through said connecting hole and said through holes to engage a rear end of said pivot shaft with a nut.

3. An articulated front axle assembly for an electric three-wheeled invalid power chair, comprising a guide bar fixedly connected at an upper end to a lower end of a front direction-control handle of said electric invalid power chair and provided at a lower end with a through hole, and a front axle provided at a predetermined position with a connecting hole; said front axle being pivotally turnably connected to the lower end of said guide bar by extending a pivot shaft through said connecting hole and said through hole to engage a rear end of said pivot shaft with a nut; two front guide wheels being separately connected to two ends of said front axle to provide a front guide wheel set for said electric invalid power chair including; said front axle being pivotally turnable about said pivot shaft relative to said guide bar in response to any unevenness, such as bumps and pits, and obstruction, such as a stair and a threshold, on a ground or a road, such that either of said two front guide wheels is able to always keep close contact with the ground or the road, and thereby provides increased side support force to said electric invalid power chair and prevents the electric invalid power chair from tilting over while making a turn.
